# EUROPÄISCHE PATENTSCHRIFT

(11) **EP 0 792 715 B1**
(45) Veröffentlichungstag und Bekanntmachung des Hinweises auf die Patenterteilung: **12.12.2001**
(21) Anmeldenummer: 97200433.7
(22) Anmeldetag: 17.02.1997
(51) Int. Cl.: B23K 11/14, F16D 69/04, F16D 23/04

(54) **Verfahren zum Verschweissen von Streusinter-Reibbelagsfolien**
Method for welding foils having a friction lining of sintered powder
Procédé pour souder des feuilles ayant une garniture de friction en poudre frittée

(30) Priorität: 23.02.1996 DE 19606731
(43) Veröffentlichungstag der Anmeldung: 03.09.1997
(73) Patentinhaber: SINTERSTAHL Gesellschaft m.b.H., D-87629 Füssen (DE)
(72) Erfinder: Rau, Günter, Dr., 87629 Weissensee/Brand (DE)
(74) Vertreter: Lohnert, Wolfgang, Dr.

(56) Entgegenhaltungen:
- DE-A- 3 609 879
- DE-C- 3 417 813
- PATENT ABSTRACTS OF JAPAN vol. 006, no. 130 (M-143), 16.Juli 1982 & JP 57 056180 A (MAZDA MOTOR CORP), 3.April 1982,

## Beschreibung

Die Erfindung betrifft ein Verfahren zum Fügen eines Bauteiles, bestehend aus einem metallischen Basiskörper mit kegelstumpfförmiger Ringfläche und einer darauf mittels elektrischem Punktschweißen aufzubringender Streusinter-Reibbelagsfolie, wobei die Folie einer Gesamtdicke von 0,4 bis 2,5 mm aus duktilem metallischem Trägerblech und porösem Metall/Nichtmetall Streusinterbelag besteht.

Derartige Bauteile werden heute vorteilhafterweise in Synchronisiereinrichtungen von Kfz-Schaltgetrieben eingesetzt. Als Basiskörper haben sich metallische Sinterformteile bewährt.

Ein solches Bauteil ist beispielsweise in der DE C1 34 17 813 beschrieben. Die Patentschrift nennt das stoffschlüssige Verbinden von Basiskörper und Streusinter-Reibbelagsfolie und verweist auf das Punktschweißen als vorzugsweises Fügeverfahren. Sie beschreibt weiters das Falzen bzw. Prägen der Folie vor dem Einbringen in und das Fügen mit dem Basiskörper in einer solchen Art und Weise, daß Basiskörper und Folie nur in einzelnen Flächenbereichen, z.B. im Bereich einzelner Folienstege, miteinander Verbindung haben.

Streusinter-Reibbelagsfolien werden durchwegs in horizontaler Lage als ebene Folien durch Aufstreuen und Aufsintern eines Streusinter-Reibbelages auf ein Trägerblech, üblicherweise ein niedrig legiertes Stahlblech, gefertigt und überwiegend auch als ebene Lamelle, insbesondere als Reiblamelle in Kupplungen und Getrieben eingesetzt.
Die Verwendung der Streusinter-Reibbelagsfolie in ölgeschmierten Synchronisationseinrichtungen für Kfz-Schaltgetriebe, wie eingangs beschrieben, stellt demgemäß einen vergleichsweise kleinen Anwendungsbereich dar.

Unter den standardisierten Punktschweißverfahren ist das elektrische Widerstands-Preßschweißen, einschließlich das Punkt- oder Buckelschweißen, besonders verbreitet.
Der Vorgang des Schweißens setzt definitionsgemäß einen Stoffaustausch zwischen den zu verbindenden Teilen in der Schweißzone unter Anwendung von Wärme und/oder Kraft voraus, ggf. unter Hinzufügen eines Schweißwerkstoffes bzw. Schweißzusatzes.

Wie z.B. der obengenannten Patentschrift zu entnehmen ist, muß bezüglich Gesamtreibverhalten von Streusinter-Reibbelagsfolien in Synchronisierbauteilen von Kfz-Schaltgetrieben jede vertretbare Maßnahme ergriffen werden, um die beim Synchronisationsvorgang mit einer Reibgegenfläche im Eingriff stehende und tatsächlich wirksame Reibfläche so groß wie möglich auszuführen.
Die Reibarbeit pro Flächeneinheit eines Reibbelages kann einen Maximalwert nicht überschreiten, ohne rasch zu verschleißen. Andererseits wurden in den vergangenen Jahren Getriebe und deren Funktionsbauteile stetig miniaturisiert, so daß konstruktionsbedingt die verfügbare Reibfläche sich trotz höherer beim Schaltvorgang aufzubringender Gesamtreibleistung verkleinerte. Getriebeteile laufen im Ölbad. Daher ist es bei Synchronisierungseinrichtungen weitgehend unverzichtbar, zur Ölverdrängung während des Reibschlusses Öldrainagenuten in den Reibbelag einzubringen. Die Nutenflächen gehen der theoretischen Gesamtreibfläche als reibaktive "tragende" Reibfläche verloren. Die Folge war, daß für vorgenannte Anwendung zwar eine Vielzahl standardisierter Schweißverfahren, insbesondere auch Puntkschweißverfahren, erprobt, aber letztlich als für die Serienfertigung nicht geeignet verworfen wurde.

Übliche konduktive Widerstands-Punktschweißung von Streusinter-Reibbelagsfolien ergaben eine ungenügende mechanische Haftung auf dem Basiskörper. Der Streusinter-Reibbelag neigt zur Schweißperlen-Bildung, die beim Reiben stören. Das Punktschweißen derartiger Stoffverbunde erfordert vergleichsweise große Elektrodendurchmesser. Übliches Widerstands-Punktschweißen im Bereich kleiner, in die Folie eingebrachter Noppen bzw. Buckel führt zum Schmelzen der Folie, ohne daß es zu einer tragfähigen Schweißverbindung kommt. Die neben den Fügeflächen verbleibende aktive Belagsreibfläche wird empfindlich verkleinert. Werden aber hohe Schweißenergien im Verfahren verwendet und damit die für eine gute Folienhaftung ausreichend große Schmelzzonen erzeugt, so ist das Resultat speziell für Synchronisierungsbauteile unakzeptabel, einmal wegen der zu kleinen verbleibenden tragfähigen Reibfläche, zum anderen auch wegen Verzuges der Folie mit Nichteinhaltung der benötigten Maßtoleranzen für die Reibfläche als Folge.

Bisher hat sich nur das Einbringen der Streusinter-Reibbelagsfolie im Baisskörper mittels Laser-Punktschweißen als praktisch hinreichend tauglich erwiesen, wobei allerdings bei diesen Ausführungen die Schweißpunkte bzw. Schweißnaht nicht innerhalb der aktiven Reibfläche liegen, sondern in einem Randbereich der Folie, einem seitlich angefalzten Bund.

Der Verzicht auf Verschweißung der Teile im Bereich des aktiven Reibbelages birgt indes die Gefahr, daß sich unter hoher Reibbelastung die Streusinter-Reibbelagsfolie und der Grundkörper gegeneinander verschieben bzw. verwinden und damit die Reibwirkung beeinträchtigen. Trotz sorgfältiger Steuerung der Schweiß-Verfahrensparameter lassen sich bei diesem Verfahren im Bereich der Schweißverbindung Kalt- und Warm-, sowie Schwundrisse nicht ganz vermeiden. Weiters kommt es häufig infolge von organischen Solventien, von Nitriden, Oxiden und/oder Sulfiden im Basiskörper und an der Oberfläche der Teile zu unbefriedigender Porenbildung und damit zur Herabsetzung der Festigkeit der Schweißverbindung.

Als schwerwiegender Nachteil aller bisher erprobten Ausführungen von Fügeverbindungen, einschließlich der Laserschweißung im Bereich des Bundes zeigte sich, daß keines der erprobten Standard-Schweißverfahren den im Automobilbau üblicherweise angelegten Sicherheitsansprüche genügte, hier die Sicherheitsreserven bei der mechanischen Abscherfestigkeit der Fügeverbindungen, gemessen an den tatsächlich im Reibschluß an den Folien möglicherweise auftretenden Scherkräften. Das Risiko eines Ablösens der Folie vom Basiskörper bei der technisch realisierbaren Reibgrenzbelastung ist bisher unzureichend hoch.
Das Problem verschärfte sich, wenn, wie üblich, oberflächennitrierte, einsatzgehärtete und mit organischen Oberflächenfilmen behaftete Basiskörper aus Eisenbasiswerkstoffen verwendet wurden.

Es überrascht angesichts der oben geschilderten Schwierigkeiten und Nachteile beim Fügen einer Streusinter-Reibbelagsfolie mit einem Basiskörper nicht, daß eine Vielzahl von Versuchen unternommen wurde, auf das Einschweißen derartiger Folien in Bauteile von Synchronisiereinrichtungen für Kfz-Schaltgetrieben ganz zu verzichten und statt dessen den auf den Reibflächen gewünschten Reibbelag direkt auf die Kegelstumpffläche den Basiskörper aufzubringen und aufzusintern. Keiner dieser Versuche hatte indes den gewünschten Erfolg. Streusinter-Reibbeläge lassen sich bis heute nicht, bzw. nicht annähernd in der Qualität auf gekrümmte Flächen Aufbringen, wie das bei der üblichen Fertigung von Streusinter-Reibbelagsfolien selbstverständlich ist, d.h. beim Aufstreuen des Reibbelages auf eine ebene Trägerfolie und Aufsintern in horizontaler Lage.

Unter den Bauteilen der vorgenannten Gattung nimmt der sogenannte Doppelkonus eine Sonderrolle ein. Es handelt sich dabei um ein Bauteil aus vergleichsweise dickem, formstabilen Trägerblech, gemessen an Folien für obengenannte Verwendung. Das Trägerblech wird im ebenen Zustand zunächst auf einer Seite mit Streusinter-Reibbelag belegt und der Belag versintert, ehe der Prozeß des Belegens mit Streusinterbelag und des Versinterns auf der anderen Trägerblechseite wiederholt wird. Die so gefertigte, ebene Folie wird entsprechend der DE C1 36 09 879 anschließend durch Tiefziehen in die für derartige Reibflächen übliche Kegel- bzw. Konusform gebracht. Ein solcher Reibring ist im Getriebe als schwimmendes Bauteil zwischen dem Reibpaar zweier axial beweglicher Reibgegenflächen eingebracht. Die beim Synchronisationsvorgang tatsächlich verfügbare Reibfläche wird dadurch verdoppelt.

Derartig gefertigte Doppelkonusringe weisen allerdings den schwerwiegenden Nachteil schlechterer Reibqualität auf. Angesichts des für derartige Ausführungen benötigten massiven Trägerblechs werden beim Tiefziehen hohe Umformkräfte auf die Reibbelagsfläche aufgebracht. Dadurch verlieren die Streusinter-Reibbeläge ihre für sie ursprünglichen, für derartige Reibanwendungen besonders auszeichnenden Porösitäts- und Reibeigenschaften mit der Folge, daß der durch die Flächenverdopplung für das Gesamtreibverhalten erzielte Gewinn wieder annährend auf das Niveau des Bauteiles mit einseitiger Reibfläche und voll ausgebildeter Streusinter-Reibbelagsqualität reduziert wird.

Aufgabe vorliegender Erfindung ist es daher, ein Verfahren für das Fügen von Bauteilen der eingangs genannten Art bereitzustellen, das die Nachteile der bisher für derartige Typen von Bauteilen erprobten Verfahren nicht aufweist. Das Verfahren soll insbesondere die Bereitstellung von Bauteilen ermöglichen, welche Punktschweißungen in der Reibfläche selbst besitzen und damit die geschilderten Nachteile solcher nur außerhalb der aktiven Reibfläche geschweißten Folien nicht aufweisen. Die so gefertigten Bauteile sollen verbesserte Festigkeit und Haftung zwischen Folie und Basiskörper aufweisen, so daß die im Automobilbau allgemein gültigen Festigkeitsreserven für die Ausfallsicherheit gewährleistet sind. Das neue Fügeverfahren sollte den reibaktiven "tragenden" Teil der Reibfläche, gemessen an der theoretisch verfügbaren Reibfläche, allenfalls nur unbedeutend beeinträchtigen. Dazu müssen die Schweißzonen auf die Folienbereiche beschränkt werden, die als Drainagenuten im Reibbelag bereits als reibaktiver Teil verloren sind.

Diese Aufgabe zum Fügen eines Bauteils wird erfindungsgemäß durch die Maßnahmen gemäß kennzeichnendem Teil von Anspruch 1 gelöst.

Die gemäß Erfindung verwendeten Streusinter-Reibbelagsfolien sind denen vergleichbar, wie eingangs beschrieben.

Während das Impulsschweißen, insbesondere auch als Kondensatorentladungsverfahren als solches vorbekannt ist, so liegt für das Verschweißen von folienartigen Werkstoffen entsprechend der Streusinter-Reibbelagsfolie mit stoffmäßig sehr inhomogenem Zweischichtaufbau keine verwertbare Erfahrung vor. Tatsächlich kommt der stofflichen und räumlichen Ausgestaltung der Schweißzone entsprechend dem erfinderischen Verfahren große Bedeutung zu. Nach keinem anderen Schweißverfahren konnten annähernd vergleichbare Schweißverbindungen hergestellt werden.

Eine vorrangige Maßnahme beim erfinderischen Verfahren ist "die Einstellung eines kontrollierten elektrischen Verbundrestwiderstandes". Der elektrische Impuls einer Kondensatorentladungsmaschine wird über einen Transformator des Innenwiderstandes Ri induktiv in den Schweißstromkreis eingespeist. Bei niederer elektrischer Spannung von beispielsweise 20 V ist der Schweißstromkreis auf einen Strom von bis zu 100.000 A ausgelegt. Entsprechend wichtig ist die Einstellung und Einhaltung eines angepaßten elektrischen Widerstandes Ra im Verbund Elektrode (Druckstempel) / Folie / Basiskörper. Es muß annähernd gelten Ra = Ri. Ein zu großer StempelAnpreßdruck auf die Noppen, d.h. ein zu kleines Ra, erzeugt nicht die gewünschte Schmelzzone. Es kommt zu keiner tragfähigen Schweißverbindung.
Ein zu geringer Druck auf den Stempel, gleichbedeutend mit zu großem Ra, führt ebenfalls zu keiner Schweißverbindung. Es kommt lediglich zum Verspritzen von Folienwerkstoff im Noppenbereich.

Nicht weniger erfolgsbestimmend ist die Einhaltung einer mit dem Impuls vorzugsweise zu übertragenden Schweißgesamtenergie. Die der Erfindung gemäßen Werte liegen, abhängig von den verwendeten Werkstoffen, in einem schmalen Energiebereich. Dabei zeigt eine Graphik der Scherkräfte - zum Ablösen bzw. Abreißen einer mit dem Basiskörper verschweißten Noppe erforderlich - als Funktion der Schweißenergie pro Noppe einen Kurvenverlauf mit deutlich ausgeprägtem Maximum.

Die Einbringung einer optimierten Schweißenergie gibt indes ebenfalls noch keine Gewähr für eine gute Schweißverbindung. Für die elektrische Energie E gilt die Beziehung E = ∫I(t)² x Rₐ(t) dt.
Der beim Entladungsimpuls im Mittel auftretende Strom I führt zu einer Erwärmung und Aufschmelzung der Werkstoffe im Fügebereich. Ist nun die Impulsdauer t zu lange, d.h. größer als 10⁻¹ Sekunden, so bleibt die Erwärmung nicht auf den gewünschten Schmelzbereich beschränkt. Es kommt zu einer mehr oder weniger unkontrollierten Ausweitung der Schmelzzone, sowohl im Basiskörper, als auch in der Folie über den Noppenbereich hinaus.

Zu kurze Impulszeiten von kleiner 10⁻⁴ Sekunden sind einerseits anlagentechnisch schwer beherrschbar und führen im Werkstoff zu nachteiligen Rissen und Fließvorgängen.

Schließlich ist auch die Einbringung eines geeigneten, gespreizten Druckstempels, der auch als Schweißelektrode dient, für das Versuchsergebnis bedeutsam. Wie bereits zuvor erwähnt, ist ein kontrollierter Restwiderstand im Fügeverbund einzustellen. Der Anpreßdruck, in der Regel auf die Folie im gesamten Konusbereich gleichzeitig aufgebracht, ist möglichst gleichmäßig auf alle Noppen zu verteilen.
Um in Praxis unvermeidbare Stempeldruck-Unsymmetrien auszugleichen, wird daher mit Vorteil ein erster Stromimpuls aufgebracht, dann wird der Spreizstempel beispielsweise um 180° verdreht und ein zweiter Stromimpuls für eine Nachschweißung aufgebracht. Bei diesem Verfahren ist es unverzichtbar, daß der unter Anpreßdruck auf der Folie aufliegende Druckstempel eine Vorspannkraft dergestalt besitzt, daß der Stempel bei radialem Schrumpfen von Folie und/oder Basiskörper während des Schweißprozesses praktisch verzögerungsfrei nachgeführt wird, so daß der Stempeldruck und damit der Außenwiderstand Ra des Schweißstromkreises über die gesamte Impulsdauer hinweg weitgehend unverändert bleiben.

Das Verfahren ist nicht auf bestimmte Teile, Bauformen und Basiswerkstoffe beschränkt. Die bevorzugte Anwendung des Verfahrens liegt indes bei Bauteilen, die als Synchronisiereinrichtungen in ölgeschmierten Kfz-Getrieben eingesetzt werden. Fügeverbindungen in den Reibflächen von Synchronringen, oder alternativ auch im Bereich der Gangrad-Konusfläche eines Reibpaares sind gleichermaßen denkbar. Die Reibflächen können als Innenkonus- und/oder als Außenkonusflächen ausgestaltet sein.
Durch das erfinderische Verfahren läßt sich insbesondere die Fertigung von Doppelkonusringen mit Streusinter-Reibbelag um eine völlig neuartige, verbesserte Technologie mit wesentlichen Eigenschaftsverbesserungen gegenüber Ringen nach dem bekannten Stand der Technik erweitern.

Bauteile für den Anwendungsbereich Synchronisiereinrichtungen werden wegen deren komplexer geometrischer Form heute vermehrt als Sinterformteile gefertigt und nicht wie bisher üblich über Zerspanen von Schmelzrohlingen. Sinterteile besitzen aber nach ihrer Fertigstellung eine Restporosität, die das Fügen entsprechender Teile im allgemeinen erschwert und Schweißverbindungen mit nur vergleichsweise beschränkter Festigkeit und Haftung erlaubt.
Das erfindungsgemäße Verfahren ist besonders vorteilhaft auf Bauteile mit Sinterbasiskörpern anwendbar, weil durch den schockartigen hohen Stromimpuls die ursprünglich poröse Sinterstruktur im Fügebereich merklich verdichtet und damit wesentlich verfestigt wird.

Weitere vorzugsweise Ausgestaltungen des erfinderischen Verfahrens und danach gefertigter Bauteile sind in den Patent-Unteransprüchen beschrieben.

Die Anwendung des erfindungsgemäßen Verfahrens auf Bauteile der beschriebenen Art war durch keinen bekannten Stand der Technik vorgezeichnet.
Die spezielle Ausgestaltung der einzelnen Schweißzone, die sich wiederum nur unter Einhaltung einzelner erfindungswesentlicher Verfahrens-Randbedingungen einstellt, war überraschend.

Infolge des kurzzeitigen, schockartigen Schweißvorganges gemäß Erfindung
- wird ein "Ankleben" des Druckstempels an der Folie vermieden (im Unterschied zum Anschweißen z.B. einer Schweißzange mit dünnem Stempel beim Schweißen mit konventionellen Schweißautomaten)
- erfolgt ein dynamisches Verdichten des Sinterbasiskörpers und damit eine Erhöhung der mechanischen Festigkeit im Fügebereich
- erfolgt der für das Schweißen charakteristische Stoffaustausch, insbesondere die Wanderung von freiem Kohlenstoff überwiegend in radialer Richtung, wie aus Werkstoffstruktur-Untersuchungen unzweifelhaft entnehmbar ist
- entsteht im Basiskörper und in der Folie außerhalb der Schweißzone nur geringe Wärme, bzw. allenfalls eine nur geringe Temperaturerhöhung, so daß der Streusinter-Reibbelag selbst im Noppenbereich während des Schweißvorganges nicht aufschmilzt und die "tragende" Reibfläche - als diejenige außerhalb von Noppe oder Drainagenut - nicht beeinträchtigt wird.

Neben den qualitativen Festigkeitsverbesserungen von erfindungsgemäßen Bauteilen gegenüber dem Stand der Technik weisen erfindungsgemäß gefertigte Teile eine Reihe zusätzlicher Vorteile auf:
- während Streusinter-Reibbelagsfolien in Synchronisiereinrichtungen nach dem Stand der Technik nach dem Einbringen nur in eingeschränktem Umfang auf Sollmaß kalibrierbar sind und dementsprechend eine hohe Maßgenauigkeit der unbelegten Konusflächen im Basiskörper voraussetzen, notfalls über mechanische Nachbearbeitung des vorgefertigten Bauteiles, so ist das Kalibrieren des verschweißten Fertigteiles auf Konusflächen-Sollmaß bei Bauteilen problemlos durchführbar, die nach dem erfinderischen Verfahren gefertigt wurden.
- die genoppte Folie kann auf gas- oder plasmanitrierte und auf einsatzgehärtete Werkstoffoberflächen des Basiskörpers aufgeschweißt werden.
- die Fertigungstaktzeiten für das Aufbringen der Folie auf den Basiskörper sind insbesondere bei großen Bauteilabmessungen wesentlich kürzer als diejenigen für lasergeschweißte Bauteile nach dem praktizierten Stand der Technik. Die Fertigung wird dadurch wirtschaftlicher.
- Bauteile nach dem erfinderischen Verfahren weisen weitgehend riß- und porenfreie Schweißverbindungen auf, im Unterschied zu den bisher in Praxis allein eingesetzten lasergeschweißten Bauteilen.

### BEISPIEL 1:

In Durchführung des erfinderischen Fügeverfahrens wird eine genoppte Streusinter-Reibbelagsfolie in den Innen- bzw. Außenkonus eines pulvermetallurgisch gefertigten Synchronringes vom Ringdurchmesser 114 mm oder eines entsprechenden Gleichlaufkegels als Bauteilbasiskörper eingebracht und mittels Hochstromimpulsen widerstandsverschweißt.
Die Streusinter-Reibbelagsfolie besteht aus einem duktilen, biegsamen Trägerblech auf Eisenbasis (Sorte ST 2) und einem darauf aufgesinterten Streusinter-Reibbelag, der im wesentlichen aus Bronze-, Messing-, Kupfer-, Zinn-, Zink-, Quarz-, Graphit- und/oder Sinterstahl-Teilchen besteht. Der Streusinter-Reibbelag ist mit einem Waffelmuster von Öldrainagenuten versehen.
In die nach standardisierten Verfahren ausschließlich als ebene Folie gefertigten Streusinter-Reibbelagsfolien werden zunächst von der Belagseite her punktförmige, gleichmäßig über die Fläche verteilte Vertiefungen (Noppen) mit Hilfe einer hydraulischen Presse eingeprägt. Die Noppen werden im Flächenbereich der Öldrainagenuten, und zwar gleichzeitig mit den Nuten und mit einem einzigen Prägestempel eingeprägt. Dadurch wird der reibaktive Anteil der Folienfläche nur minimal reduziert. Die Noppen sind etwa halbkugelförmig, haben eine Grundfläche von 1,3 mm² und eine Höhe von 0,25 mm.

Die Noppen müssen gleichmäßig über die Folie verteilt werden, damit die übrigen Bereiche des Trägerbleches beim Auflegen und Verschweißen keinen Kontakt mit dem Basiskörper bekommen. Andernfalls entstünden beim Schweißvorgang unerwünschte Kurzschlüsse und die gewünschte Verschweißung, beschränkt auf die Noppenbereiche, fände nicht statt. Die Folie hat eine Gesamtdicke von 1 mm. Die Dicke des Trägerbleches und des Streusinter-Reibbelages betragen jeweils 0,5 mm. Nach dem Biegen und Einlegen der Folie - ggf. auch als 2 oder 3 Folienabschnitte -in die kegelstumpfförmige Reibfläche des Basiskörpers erfolgt das Aufpressen der Folie auf den Basiskörper mit Hilfe eines segmentierten Druckstempels, und zwar bis zu einem Druckwert, daß sich in dem so gebildeten Verbund ein vorgegebener elektrischer Restwiderstand einstellt. Dabei werden die Noppen teilweise verformt, d.h. das Zentrum der ursprünglich halbkugelförmigen Noppe wird leicht abgeflacht. Der Druckstempel weist Spreizelemente auf, die zum Beispiel beim Verdichten bzw. Schrumpfen der so beaufschlagten Stoffbereiche während des Schweißvorganges dem Stempel ein praktisch verzögerungsfreies radiales Nachsetzen bei praktisch gleichbleibendem Aufpreßdruck ermöglichen.

Beim anschließenden Kondensator-Entladungsschweißen werden alle Noppen gleichzeitig durch zwei aufeinanderfolgende Stromimpulse mit dem Basismaterial verschweißt. Durch das Einbringen eines zweiten, dem ersten unmittelbar folgenden Impulses wird ein Anlaßeffekt in der Härtungszone innerhalb der Schweißzone und damit eine Duktilisierung zuvor sprödgehärteter Schichten erzielt. Daneben lassen sich durch einen zweiten Impuls nicht ganz vermeidbare Unsymmetrien innerhalb einzelner Folienbereiche hinsichtlich Stempelanpreßdruck und Ausgestaltung der Schweißzone in der einzelnen Noppe ausgleichen. Die dabei eingebrachte Energie pro Noppe liegt bei einem Wert von etwa 0,1 kWs. Die Schweißzeit betrug 5 x 10⁻³ s, der Schweißstrom erreichte einen Spitzenwert von etwa 50.000 Ampere, bzw. von etwa 1000 A pro Noppe.
Die danach ausgebildeten Schweißzonen im jeweiligen Noppenbereich lagen hinsichtlich Schmelzzone und Stoffstruktur im erfindungsgemäß beanspruchten Bereich. Die ursprüngliche Noppentiefe von 0,25 mm wurde infolge des Schweißvorganges auf etwa 0,1 mm reduziert, die horizontale Flächenausdehnung der Schweißzone lag bei 90 % Noppengrundfläche. Die beschriebenen Schweißparameter waren in einer Reihe von vorausgegangenen Optimierungsversuchen mit den einem Fachmann geläufigen Mitteln erarbeitet worden.

Ein nach diesem Verfahren als Synchronring ausgestaltetes Bauteil wurde zunächst einem mechanischen Festigkeitstest unterzogen.
Dazu wird die Folie über seitlich an der Schmalseite angreifende Scherkräfte auf ihre Abrißfestigkeit vom Basiskörper hin überprüft bzw. es wurde die Scherkraft ermittelt, die zum Ausdrücken der Folie aus der Konusfläche erforderlich ist.
Das gemäß Erfindung gefertigte Bauteil erforderte zum Auspressen der Folie eine Scherkraft von 0,5 kN/Noppe. Zum Vergleich im üblichen Reibschluß lassen sich auf das Synchronbauteil mit der üblichen Noppendichte nur weniger als 1/10 dieses Wertes über Reibbelagsflächenpressung aufbringen.

Die Folie läßt sich nur duch Abreißen entlang ihrer Schweißzonen-Begrenzung aus der Konusfläche herausdrücken. Es tritt weder ein Abheben der Folie im Noppenbereich, noch ein Einreißen der Folie in das Innere der Schweißzone auf.

Daneben wurden dynamische Lastwechselversuche durchgeführt.
Dabei wurden unter in Praxis in der Konus-Reibfläche unter dynamischer Belastung maximal auftretenden Scherkräften von etwa 0,25 kN/Noppe 1 Mio. Lastwechsel durchgeführt, viermal mehr als für ein Seriengetriebe veranschlagt, ohne daß Rißbildung an der Schweißzone oder gar ein Einreißen der Folie sichtbar wurden.

Anschließend wurde der Synchronring in einem Lebensdauerprüfstand getestet, der die sich beim Schalten im Kfz-Schaltgetriebe ergebenden Vorgänge praxisnah nachvollzieht. Der Synchronring wurde unter den nachfolgenden Versuchsbedingungen eingesetzt:

| | |
|---|---|
| Flächenpressung | 4,5 - 5,3 N/mm² |
| spezifische Reibart | 0,47 Joule/mm² |
| Gleitgeschwindigkeit | 8 m/s |
| verwendetes Öl | ATF |

Eine Flächenpressung von 5 N/mm² entspricht den höchsten, in praktischen Getriebeanwendungen auftretenden Werten. Der Versuch wurde nach mehr als 200.000 Schaltungen abgebrochen, ohne daß am Synchronring nennenswerte Verschleißmerkmale sichtbar wurden.
Ein weiterer entsprechend diesem Beispiel hergestellter Synchronisierring mit 114 mm Konusdurchmesser wurde in einem anderen Simulatortest unter Flächenpressung von 4,5 bis 5,3 N/mm² eingesetzt und in einem Stufenversuch während insgesamt 125.000 Schaltungen bei Gleitgeschwindigkeiten von abwechselnd 8 und 9,6 m/s und bei stufenweiser Erhöhung der spezifischen Reibarbeit von ursprünglich 0,35 über 0,47 auf 0,65 Joule/mm² getestet.
Auch dieser Versuch wurde ohne erkennbare Ausfallserscheinungen abgebrochen. Die Flächenpressung von 5 N/mm² entsprach dabei einem Reibmoment pro Schweißpunkt von 2 Nm = 0,035 kN Scherkraft / Noppe.
Eine anschließende Gefügeuntersuchung ergab, daß die Noppenschweißverbindungen diesen Test schadlos überstanden hatten. Diese Verschleiß- bzw. Lebensdauerwerte werden von keinem bekannten, nach einem anderen Verfahren hergestellten Bauteil übertroffen und liegen weit über den Belastungs-Grenzwerten, denen entsprechende Bauteile üblicherweise in Getrieben ausgesetzt sind.

### BEISPIEL 2:

Gemäß dem Verfahren nach Beispiel 1 werden mit Hilfe der Kondensator-Entladungsschweißung zwei genoppte, einseitig besinterte Folien so gegeneinander verschweißt, daß ein Doppelkonusring für Synchronisationseinrichtungen in Kfz-Schaltgetrieben entsteht.
Dabei werden zwei zunächst als ebene Folien gefertigte und anschließend auf entsprechende Flächenmaße gebrachte, genoppte Streusinter-Reibbelagsfolien mit Hilfe von Walzen, vorzugsweise 1 Gummiwalze (auf Reibbelagseite) und 1 Stahlwalze, derart aufgebogen, daß die Krümmung der Reibbelagsseite der einen Folie nach außen und diejenige der anderen Folie nach innen zeigte. Wahlweise kann nur die eine Folie genoppt sein, die andere ungenoppt bleiben. Die Folien werden mit um 180° gegeneinander versetzten Stoß auf eine entsprechend geformte Konusfläche aufgelegt und mittels eines segmentierten Kupferstempels von der Gegenrichtung mit Druck beaufschlagt und mittels Impulsstromentladungen geschweißt.
Als Alternative werden die beiden Folien nicht direkt gegeneinander, sondern auf ein dazwischengelegtes formstabilesTrägerblech (glattes Stahlblech ohne Streusinter-Reibbelag) aufgeschweißt. Sofern die Folien nicht schon vor dem Verschweißen entsprechend der späteren Funktionsforderungen mit Anschlagnocken versehen wurden, werden derartige Nocken nach dem Schweißen mittels Laser herausgeschnitten bzw. herausgefräst.
Im Unterschied zum tiefgezogenen Doppelkonus nach dem Stand der Technik findet bei diesem Herstellungsverfahren kein Verdichten der Streusinter-Reibbelags-Oberfläche statt.
Der nach diesem Verfahren gefügte Doppelkonus ist infolge der erfindungsgemäßen Art der Fixierung der Einzelfolien von ausreichender Steifigkeit und andererseits doch so elastisch, daß er sich den Oberflächen der ihn einschließenden Snychronisierreibpaarung, d.h. dem Außenkonus des Innenringes und dem Innenkonus des Außenringes, besser anpaßt als Doppelkonusringe nach dem Stand der Technik. Der Kraftschluß und in seiner Folge das übertragbare Reibmoment erlauben hohe Schaltleistungen bei außergewöhnlichem Schaltkomfort.

## Patentansprüche

1. Verfahren zum Fügen eines Bauteiles, bestehend aus einem metallischen Basiskörper mit kegelstumpfförmiger Fläche und einer darauf durch elektrisches Punktschweißen aufzubringenden Streusinter-Reibbelagsfolie, wobei die Folie einer Gesamtdicke von 0,4 bis 2,5 mm aus duktilem metallischem Trägerblech und porösem Metall/Nichtmetall Streusinterbelag besteht,
**dadurch gekennzeichnet,**
**daß** auf der Folie verteilt, in diese einzelne Noppen von 0,5 bis 4 mm² Grundfläche eingeprägt werden, daß anschließend die Folie bis zur Einstellung eines kontrollierten elektrischen Verbund-Restwiderstandes mittels eines zugleich als Elektrode dienenden Druckstempels über die Noppen als Stoßflächen auf die Kegelstumpffläche des Basiskörpers radial aufgepreßt wird und daß die zu fügenden Teile mittels Hochstrom-Impulsentladung von 10⁻¹ bis 10⁻⁴ Sekunden Dauer unter Bildung einer Schmelzzone im Bereich der Noppen-Stoßflächen derart verschweißt werden, daß für die so gebildete Schweißzone kumulativ gilt:
- horizontale Flächenausdehnung bei 50 - 95 % der Noppengrundfläche
- radiale Längsausdehnung kleiner als mittlere horizontale Längsausdehnung
- erschmolzene Zone beschränkt auf Stoffbereich von Basiskörper und Trägerblech
- in Radialrichtung schichtartige Folge von Stoffbereichen unterschiedlicher Zusammensetzung und/oder Struktur

2. Verfahren zum Fügen eines Bauteiles nach Anspruch 1, **dadurch gekennzeichnet, daß** eine Hochstrom-lmpulsentladung von 5 x 10⁻² - 5 x 10⁻³ Sekunden Dauer erfolgt.

3. Verfahren zum Fügen eines Bauteiles nach Anspruch 1 bis 2, **dadurch gekennzeichnet, daß** eine horizontale Flächenausdehnung der Schweißzone von 85 - 90 % der Noppengrundfläche erzeugt wird.

4. Verfahren zum Fügen eines Bauteiles nach Anspruch 1 bis 3, **dadurch gekennzeichnet, daß** ein Impuls der Stromstärke > 500 Ampere pro Noppe erzeugt wird.

5. Verfahren zum Fügen eines Bauteiles nach Anspruch 1 bis 4, **dadurch gekennzeichnet, daß** unmittelbar aufeinanderfolgend zwei Hochstrom-Impulsentladungen erzeugt werden.

6. Verfahren zum Fügen eines Bauteiles nach Anspruch 1 bis 5, **dadurch gekennzeichnet, daß** die Hochstrom-lmpulsentladung mittels Kondensatorentladung erzeugt und induktiv in einen Niedervolt-Schweißstromkreis transformiert wird.

7. Verfahren zum Fügen eines Bauteiles nach Anspruch 1 bis 6, **dadurch gekennzeichnet, daß** im Schweißstromkreis der kontrollierte elektrische Verbund-Restwiderstand dem Wert des Innenwiderstandes des Schweißstromkreises angenähert wird.

8. Verfahren zum Fügen eines Bauteiles nach Anspruch 1 bis 7, **dadurch gekennzeichnet, daß** als Basiskörper ein Sinterformteil verwendet wird.

9. Verfahren zum Fügen eines Bauteiles nach Anspruch 1 bis 8, **dadurch gekennzeichnet, daß** poröse Stoffanteile im Bereich um die Schmelzzone verdichtet und mechanisch verfestigt werden.

10. Verfahren zum Fügen eines Bauteiles nach Anspruch 1 bis 9, **dadurch gekennzeichnet, daß** als Werkstoff des Basiskörpers ein kohlenstoffhaltiger Eisenwerkstoff verwendet wird und daß in einer Schicht der Schmelzzone ein Martensit-Zwischenstufen- und in einer weiteren Schicht ein Perlit-Zwischenstufen-Gefüge erzeugt wird.

11. Verfahren zum Fügen eines Bauteiles nach Anspruch 1 bis 10, **dadurch gekennzeichnet, daß** als Druckstempel ein segmentierter Spreizstempel verwendet wird, der unter hohem Spreizdruck stehend in Aufpreßrichtung verzögerungsfrei nachführbar ist.

12. Verfahren zum Fügen eines Bauteiles nach Anspruch 1 bis 11, **dadurch gekennzeichnet, daß** in die Folien gleichzeitig mit den Noppen von 0,2 - 1 mm Tiefe zusätzlich Drainagenuten eingebracht werden, wobei Noppenflächen von Drainagenuten überlagert werden.

13. Verfahren zum Fügen eines Bauteiles nach einem der Ansprüche 1 bis 12, **dadurch gekennzeichnet, daß** auf einem kegelstumpfförmigen formstabilen Blech als Basiskörper beidseitig, gleichzeitig oder nacheinander, je eine Streusinter-Reibbelagsfolie aufgebracht wird.

14. Verfahren nach einem der Ansprüche 1 bis 13 zur Herstellung eines Bauteils, **dadurch gekennzeichnet, daß** dieses auf die Herstellung eines Synchronisierbauteiles für KfZ-Schaltgetriebe, insbesondere eines Synchronisierings oder eines Gangrad-Gegenkonus angewendet wird.

15. Verfahren nach einem der Ansprüche 1 bis 13 zur Herstellung eines Bauteils, **dadurch gekennzeichnet, daß** dieses auf die Herstellung eines Doppelkonus-Synchronisierringes mit zwei gegeneinander verschweißten Streusinter-Reibbelagsfolien angewendet wird, wobei die belagsfreien Flächen der Trägerbleche im Abstand der Noppentiefe flächig aneinander liegen und die Stöße um 180° gegeneinander versetzt sind.

## Claims

1. Process for the joining of a structural part consisting of a metal base member with a truncated conical surface and a foil having a friction lining of sintered powder to be applied thereto by electrical spot welding, wherein the foil has a total thickness of 0.4 to 2.5 mm and consists of a ductile metal carrier sheet and a porous metal/non-metal lining of sintered powder, **characterised in that** individual burls of 0.5 to 4 mm² base area distributed over the foil are punched into the latter, that the foil is then radially pressed over the burls acting as impact surfaces on the truncated conical surface of the base member by means of a pressure punch simultaneously acting as electrode, until a controlled electrical residual resistance of the composite has been established, and that the parts to be joined are welded by means of high current pulse discharges of 10⁻¹ to 10⁻⁴ seconds' duration with the formation of a fusion zone in the region of the burl impact surfaces, in such a way that the resultant welding zone overall exhibits the following characteristics:
- horizontal area extension of 50 - 95% of the burl base area
- radial longitudinal extension less than the mean horizontal longitudinal extension
- molten zone restricted to the substance region of the base member and metal carrier sheet
- in the radial direction,layer-like sequence of substance regions of different composition and/or structure.

2. Process for joining a structural part according to claim 1, **characterised in that** a high current pulse discharge of 5 x 10⁻² - 5 x 10⁻³ seconds' duration is employed.

3. Process for joining a structural part according to claim 1 or 2, **characterised in that** a horizontal area extension of the welding zone of 85 - 90% of the burl base area is produced.

4. Process for joining a structural part according to claims 1 to 3, **characterised in that** a pulse of current intensity > 500 amps. per burl is generated.

5. Process for joining a structural part according to claims 1 to 4, **characterised in that** two high current pulse discharges immediately following one another are generated.

6. Process for joining a structural part according to claims 1 to 5, **characterised in that** the high current pulse discharge is generated by condenser discharge and is transformed inductively into a low voltage welding current circuit.

7. Process for joining a structural part according to claims 1 to 6, **characterised in that** in the welding current circuit the controlled electrical residual resistance of the composite is approximately equal to the value of the internal resistance of the welding current circuit.

8. Process for joining a structural part according to claims 1 to 7, **characterised in that** a sintered blank is used as base member.

9. Process for joining a structural part according to claims 1 to 8, **characterised in that** porous substance fractions in the region around the fusion zone are compacted and mechanically strengthened.

10. Process for joining a structural part according to claims 1 to 9, **characterised in that** a carbon-containing iron material is used as material for the base member and that a martensite intermediate stage structure is produced in one layer of the fusion zone, and a pearlite intermediate stage structure is produced in a further layer.

11. Process for joining a structural part according to claims 1 to 10, **characterised in that** a segmented expanding punch is used as pressure punch, which can be guided instantaneously in the pressing direction under a high expanding pressure.

12. Process for joining a structural part according to claims 1 to 11, **characterised in that** drainage grooves are additionally introduced into the foils simultaneously with the burls of 0.2 - 1 mm depth, the drainage grooves being superimposed on the burl surfaces.

13. Process for joining a structural part according to claims 1 to 12, **characterised in that** a foil having a friction lining of sintered powder is applied to both sides, simultaneously or in succession, of a truncated conical dimensionally stable metal sheet as base member.

14. Process according to one of claims 1 to 13 for producing a structural part, **characterised in that** the latter is employed for the production of a synchronising structural part for vehicle transmission mechanisms, in particular a synchronising ring or a transmission counter-cone.

15. Process according to one of claims 1 to 13 for producing a structural part, **characterised in that** this is used in the production of a double cone synchronising ring with two foils having a friction lining of sintered powder welded to one another, wherein the lining-free surfaces of the metal carrier sheets lie in a planar arrangement with respect to one another at a distance from the burl depth, and the joints are displaced by 180° with respect to one another.

## Revendications

1. Procédé pour assembler un composant constitué d'un corps de base présentant une surface de forme tronconique et une feuille ayant une garniture de friction en poudre frittée qui doit être appliquée sur le corps de base par soudure électrique par points, dans lequel la feuille est constituée d'une tôle support métallique ductile et d'une garniture en poudre frittée en métal/métalloïde poreux, en présentant une épaisseur totale de 0,4 à 2,5 mm,
**caractérisé en ce que**
on incruste dans la feuille, en les répartissant sur celle-ci, des nopes individuelles ayant une surface de base de 0,5 à 4 mm², **en ce que**, ensuite, on comprime la feuille radialement sur la surface tronconique du corps de base, jusqu'à l'obtention d'une résistance électrique composite de saturation contrôlée, au moyen d'un poinçon servant en même temps d'électrode, par l'intermédiaire des nopes qui constituent des surfaces de choc et **en ce que** les éléments à assembler sont soudés, au moyen d'une impulsion de décharge de forte intensité dont la durée est comprise entre 10⁻¹ et 10⁻⁴ seconde, en formant une zone de fusion dans la région des surfaces de chocs à nopes de telle manière que la zone de fusion formée présente les caractères suivants cumulés :
- extension horizontale pour 50 à 95 % de la surface de base des nopes,
- extension longitudinale radiale plus petite que l'extension longitudinale horizontale moyenne,
- zone élaborée limitée à la région de matière du corps de base et de la tôle support,
- dans la direction radiale, succession en couches de régions de matière de compositions et/ou structures différentes.

2. Procédé pour assembler un composant selon la revendication 1, **caractérisé en ce qu'**une impulsion de décharge de forte intensité a une durée comprise entre 5 x 10⁻² à 5 x 10⁻³ seconde.

3. Procédé pour assembler un composant selon la revendication 1 ou 2, **caractérisé en ce que** l'on produit une extension horizontale de la zone de fusion de 85 à 90 % de la surface de base des nopes.

4. Procédé pour assembler un composant selon l'une quelconque des revendications 1 à 3, **caractérisé en ce que** l'on produit une impulsion ayant une intensité supérieure à 500 ampères pour chaque nope.

5. Procédé pour assembler un composant selon l'une quelconque des revendications 1 à 4, **caractérisé en ce que** l'on produit deux impulsions de décharge à forte intensité qui se succèdent immédiatement.

6. Procédé pour assembler un composant selon l'une quelconque des revendications 1 à 5, **caractérisé en ce que** l'impulsion de décharge à forte intensité est produite au moyen d'une décharge de condensateur et est transformée de manière inductive dans un circuit de courant de soudage à basse tension.

7. Procédé pour assembler un composant selon l'une quelconque des revendications 1 à 6, **caractérisé en ce que**, dans le circuit de courant de soudage, on donne à la résistance électrique composite de saturation contrôlée une valeur proche de la valeur de la résistance interne du circuit de courant de soudage.

8. Procédé pour assembler un composant selon l'une quelconque des revendications 1 à 7, **caractérisé en ce que** l'on utilise, en tant que corps de base, une pièce frittée.

9. Procédé pour assembler un composant selon l'une quelconque des revendications 1 à 8, **caractérisé en ce que** des portions de matière poreuse sont comprimées et solidifiées de manière mécanique dans la région entourant la zone de fusion.

10. Procédé pour assembler un composant selon l'une quelconque des revendications 1 à 9, **caractérisé en ce que** l'on utilise, en tant que matière première du corps de base, un produit ferreux contenant du carbone et **en ce que** l'on produit, dans une couche de la zone de fusion, une structure à état intermédiaire en martensite et, dans une autre couche, une structure à état intermédiaire en perlite.

11. Procédé pour assembler un composant selon l'une quelconque des revendications 1 à 10, **caractérisé en ce que** l'on utilise, en tant que poinçon, un poinçon à expansion segmenté qui peut être guidé immédiatement, en étant dressé, sous une pression d'expansion élevée, dans la direction de compression.

12. Procédé pour assembler un composant selon l'une quelconque des revendications 1 à 11, **caractérisé en ce que** l'on ménage dans les feuilles, en même temps que les nopes, de manière supplémentaire, des encoches de drainage dont la profondeur est comprise entre 0,2 et 1 mm, des surfaces de nope étant recouvertes par des encoches de drainage.

13. Procédé pour assembler un composant selon l'une quelconque des revendications 1 à 12, **caractérisé en ce que** l'on dépose, sur une tôle indéformable de forme tronconique constituant le corps de base, sur ses deux faces, simultanément ou successivement, à chaque fois, une feuille ayant une garniture de friction en poudre frittée.

14. Procédé selon l'une quelconque des revendications 1 à 13, pour la fabrication d'un composant, **caractérisé en ce que** ce dernier est utilisé pour la fabrication d'un composant de synchronisation pour des boîtes de vitesses de véhicules automobiles, en particulier d'un galet de synchronisation ou d'un contre-cône de roue de vitesse.

15. Procédé selon l'une quelconque des revendications 1 à 13, pour la fabrication d'un composant, **caractérisé en ce que** ce dernier est utilisé pour la fabrication d'un galet de synchronisation à double cône comportant deux feuilles ayant une garniture de friction en poudre frittée et soudées l'une contre l'autre, les faces des tôles supports qui n'ont pas de garniture se trouvant l'une à côté de l'autre dans un même plan à distance de l'épaisseur des nopes et les surfaces de choc étant décalées de 180 ° l'une par rapport à l'autre.
